Europäisches Patentamt

European Patent Office

Office européen des brevets

(19)

(11) Numéro de publication : **0 347 385 B1**

(12) **FASCICULE DE BREVET EUROPEEN**

(45) Date de publication du fascicule du brevet :
16.09.92 Bulletin 92/38

(51) Int. Cl.⁵ : **G01L 7/12**

(21) Numéro de dépôt : **89810436.9**

(22) Date de dépôt : **08.06.89**

(54) **Mécanisme de baromètre anéroide.**

(30) Priorité : **17.06.88 FR 8808407**

(43) Date de publication de la demande :
**20.12.89 Bulletin 89/51**

(45) Mention de la délivrance du brevet :
**16.09.92 Bulletin 92/38**

(84) Etats contractants désignés :
**AT BE CH DE ES FR GB GR IT LI LU NL SE**

(56) Documents cités :
**EP-A- 0 126 273**
**DE-C- 59 124**

(73) Titulaire : **ALTITUDE S.A.**
**9, Avenue Charles De Gaulle**
**F-25500 Morteau (FR)**

(72) Inventeur : **Bosson, Gabriel**
**9, Les Vinottes**
**F-25500 Morteau (FR)**
Inventeur : **Mesnier, Emile**
**Rue de la Fruitère Montlebon**
**F-25500 Morteau (FR)**
Inventeur : **Blaise, Pascal**
**8, Clos Jeune**
**F-25500 Morteau (FR)**
Inventeur : **Vuillemin, Pierre**
**4, rue de la Source**
**F-25130 Villers le Lac (FR)**
Inventeur : **Bouteille, Christian**
**50, Bois Joli Les Fins**
**F-25500 Morteau (FR)**

(74) Mandataire : **Meylan, Robert Maurice et al**
**c/o BUGNION S.A. 10, route de Florissant**
**Case Postale 375**
**CH-1211 Genève 12 - Champel (CH)**

# Description

L'invention concerne un mécanisme de baromètre anéroïde comprenant un support, une capsule anéroïde, un arbre porteur d'une aiguille indicatrice, des moyens de transformation des mouvements linéaires de déformation de la capsule en mouvements de rotation angulaire de l'aiguille indicatrice.

Le document EP-A-0 126 273 décrit un mécanisme de baromètre, caractérisé en ce qu'un élément à forme hélicoïdale est monté de façon immobile, en ce que l'arbre de sortie peut non seulement tourner, mais peut également se déplacer en direction axiale, et en ce que l'arbre de sortie s'appuie par son extrémité qui est tournée vers la capsule à membranes sur ladite capsule à membranes et est maintenu dans cette position par le ressort de rappel.

Les mouvements linéaires de déformation de la capsule sont de très faible amplitude, de l'ordre de deux dixièmes de mm.

Le but de l'invention consiste à réaliser un mécanisme susceptible d'amplifier les mouvements de déformation de la capsule et d'augmenter ainsi la plage de lecture du baromètre.

Ce but est atteint avec le mécanisme selon l'invention tel que défini par la partie caractérisante de la revendication 1.

Des formes d'exécution avantageuses de l'invention ressortent des revendications dépendantes.

Le mécanisme de baromètre selon l'invention comporte donc, placés dans un support pour une action conjuguée,

– un levier primaire dont le centre est en contact avec le centre de la capsule, laquelle exerce en ce point du levier une force motrice Fm, l'axe de rotation de ce levier primaire étant situé à la périphérie du support et maintenu en place par un ressort d'appui, la capsule étant fixée sur le support par une vis concentrique à un axe géométrique XX passant par le centre du levier primaire;

– une vis sans fin munie d'une rampe hélicoïdale concentrique à l'axe XX, maintenue par un pont au centre du levier primaire dont cette vis est ainsi rendue solidaire, tournant librement et surmontée, à l'opposé de la capsule, par l'aiguille indicatrice du baromètre;

– un levier secondaire dont l'axe de rotation repose sur l'extrémité libre du levier primaire, lequel exerce sur le levier secondaire une force motrice Fm' transmise à la vis sans fin par une pointe formée par l'extrémité libre dudit levier secondaire, cette pointe étant en permanence dans la rampe hélicoïdale de la vis sans fin;

– un ressort unique prenant appui sur le support pour exercer une force résistante R sur le levier secondaire, lequel transmet cette force au levier primaire.

Ce mécanisme présente l'avantage d'amplifier les mouvements de la capsule anéroïde transmis à une aiguille indicatrice fixée sur la vis sans fin.

D'autres avantages ressortiront de la description, faite à titre d'exemple non limitatif, d'une forme d'exécution préférentielle et du dessin dans lequel :

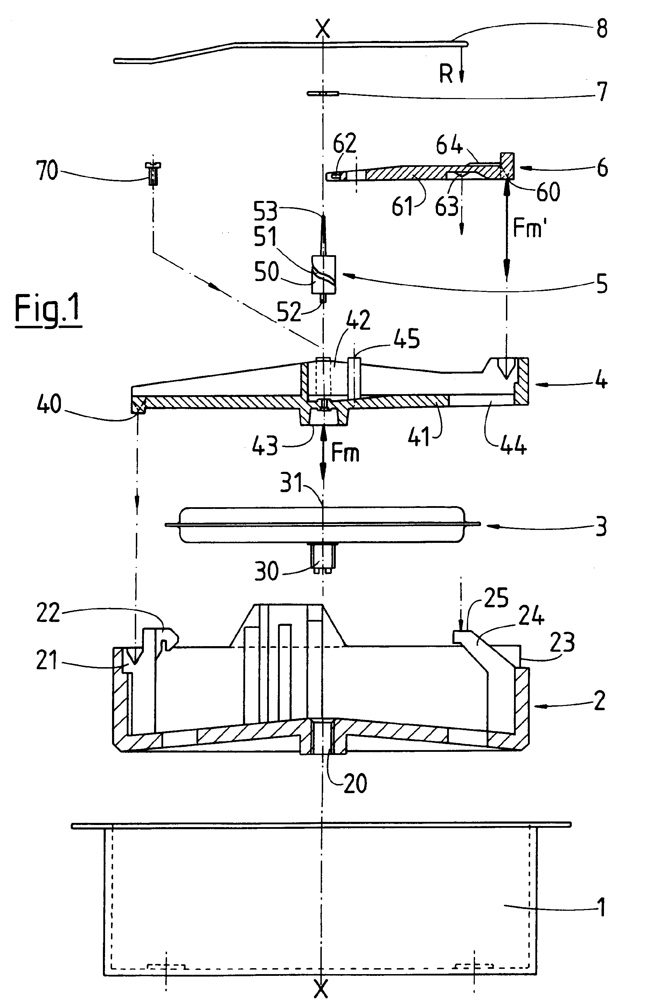

– la figure 1 est une vue éclatée et en coupe du mécanisme de transformation des mouvements linéaires alternatifs de la capsule en mouvements de rotation angulaire,

– la figure 2 est une vue de dessus du mécanisme avec le ressort d'appui.

Le mécanisme du baromètre est placé dans un boîtier 1 fermé par un cadran. Il est constitué par un support 2 de deux leviers complémentaires, un levier primaire 4 et un levier secondaire 6, coopérant pour transmettre à une vis sans fin 5 portant une aiguille indicatrice, les déformations d'une capsule anéroïde 3 circulaire, fixée par une vis 30 au centre 20 du support 2.

La vis 30 permet de régler le baromètre en fonction de l'altitude de son emplacement statique.

Le support 2 est circulaire et comporte notamment :

– un orifice fileté 20 pour la vis 30 de la capsule 3,

– un logement 21 recevant l'axe de rotation 40 du levier primaire 4,

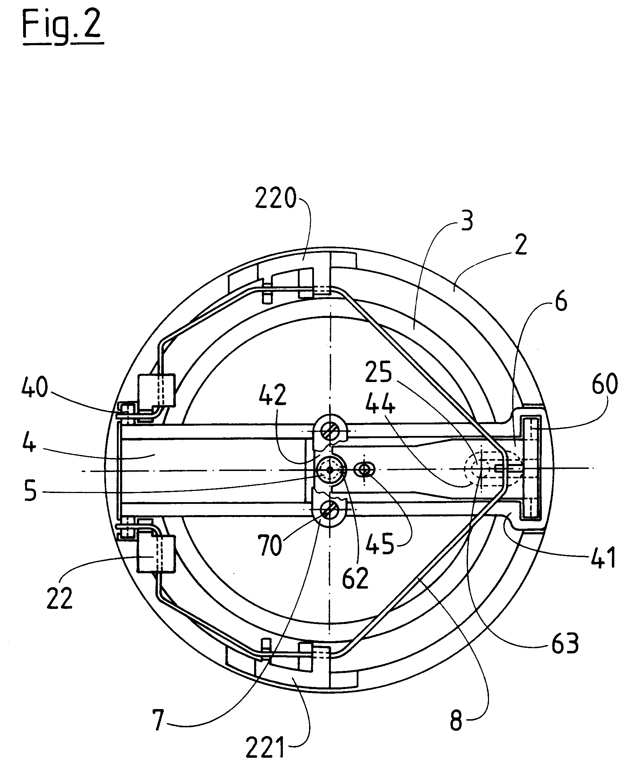

– des ergots 22 servant d'appui, de part et d'autre du levier primaire, aux branches d'un ressort 8 (fig.2) qui après passage dans des chicanes 220,221, maintiennent l'axe de rotation du levier dans son logement,

– une échancrure 23, diamétralement opposée au logement 21, guide les oscillations du levier primaire 4,

– un guide 24, fixé sur le fond du support 2 et perpendiculaire à sa base, passe à travers une ouverture oblongue 44 du bras libre 41 du levier primaire 4, la partie supérieure 25 de ce guide 24 émergeant à travers l'ouverture oblongue 44, sert de point d'appui 63 pour le levier secondaire 6.

Le levier primaire 4 comporte deux bras égaux, de part et d'autre de son point d'appui 43 sur le centre 31 de la capsule 3, l'un, fixé par le ressort 8 dans le logement 21, comportant à son extrémité l'axe de rotation 40, l'autre recevant sur son extrémité libre 41, l'axe de rotation 60 du levier secondaire 6, le point de contact 31/43 entre la capsule et le levier primaire est le point d'application d'une force motrice Fm engendrée par les variations de volume de la capsule 3 sous l'effet des variations de la pression atmosphérique.

Cette force Fm s'exerce selon un axe géométrique XX perpendiculaire au plan de symétrie de la capsule 3, en faisant pivoter le levier primaire 4 autour de son axe de rotation 40.

Le levier primaire 4 comporte, à l'opposé du point de contact 43 et concentrique à l'axe XX, une cage 42 recevant une vis sans fin 5.

Un piton 45 est fixé sur le levier primaire 4, entre la cage 42 et l'extrémité libre 41 pour guider le bras libre 61 du levier secondaire 6.

La vis sans fin 5, placée dans la cage 42 est rendue solidaire du levier primaire 4 par un pontet 7 fixé par deux vis 70, ce qui lui interdit tout déplacement axial en laissant libre sa rotation angulaire. La vis 5 comporte trois parties concentriques au même axe XX perpendiculaire aux plans superposés du support 2, de la capsule 3 et du levier primaire 4 : un cylindre 50 pourvu d'une rampe hélicoïdale 51, tournant sur un pivot 52 et prolongé à l'opposé du pivot par un arbre 53 porteur de l'aiguille indicatrice.

Un levier secondaire 6 prend appui par son axe de rotation 60 sur l'extrémité libre 41 du levier primaire 4. Le point de basculement 63 du levier 6 s'appuie, au travers de l'ouverture oblongue 44 sur la partie supérieure 25 du guide 24.

Le bras 61 du levier 6 comporte une extrémité libre en forme de pointe 62. Cette pointe 62 pénètre dans la rampe hélicoïdale 51 de la vis sans fin 5. Les mouvements du levier 6 entraînent la rotation angulaire de la vis sans fin 5 par l'action de la pointe 62 sur la rampe hélicoïdale 51.

Un ressort 8 exerce une force de rappel R qui maintient un contact permanent du levier primaire 4 sur la capsule 3. Il prend appui d'une part sur le support 2, au niveau de l'axe de rotation 40 du levier 4 qu'il maintient dans son logement 21 en passant par les ergots 22 et sur des chicanes 220, 221 situées de part et d'autre du logement 21 à la périphérie du support 2, d'autre part sur le levier secondaire 6 en un point 64 situé entre l'axe de rotation 60 et le point de basculement 63.

En résumé, ce mécanisme de baromètre est composé de cinq éléments coopérant entre eux, un support 2, un levier primaire 4, une vis sans fin 5 munie d'une rampe hélicoïdale 51, un levier secondaire 6 dont l'extrémité livre est une pointe 62, un ressort d'appui 8.

## Revendications

1. Mécanisme de baromètre anéroïde comprenant un support (2), une capsule anéroïde (3), un arbre porteur d'une aiguille indicatrice, un cadran, des moyens de transformation des mouvements linéaires de déformation de la capsule en mouvements de rotation angulaire de l'aiguille indicatrice, caractérisé par le fait que ces moyens sont constitués par l'action conjuguée, dans un suppport (2), d'un levier primaire (4) dont le centre (43) est maintenu en contact avec le centre (31) de la capsule (3), portant une vis sans fin (5), solidaire du levier primaire (4), prolongée par l'arbre (53) porteur de l'aiguille indicatrice, d'un levier secondaire (6), relié au levier primaire, manoeuvrant la vis sans fin et d'un ressort (8) prenant appui sur le support (2) pour exercer une force résistante (R) sur le levier secondaire qui la transmet au levier primaire, que l'axe de rotation (40) du levier primaire (4) est situé dans un logement (21) à la périphérie du support (2), que l'extrémité libre (41) du levier primaire supporte l'axe de rotation (60) du levier secondaire (6) au niveau d'une échancrure (23) du support, et que le point de basculement (63) du levier secondaire (6) prend appui sur un guide (24).

2. Mécanisme de baromètre selon la revendication 1, caractérisé par le fait que le centre (43) du levier primaire (4) est maintenu en contact avec le centre (31) de la capsule (3) par le ressort (8).

3. Mécanisme de baromètre selon la revendication 2, caractérisé par le fait que la vis sans fin (5) est placée dans une cage (42) au centre du levier primaire (4), rendue solidaire du levier primaire par un pont (7) fixé par des vis (70), par le fait qu'elle comporte trois parties concentriques à un même axe XX perpendiculairement aux plans superposés du support (2), de la capsule (3) et du levier primaire, un pivot (52), un cylindre (50) pourvu d'une rampe hélicoïdale (51), un arbre (53) porteur de l'aiguille indicatrice.

4. Mécanisme de baromètre selon la revendication 3, caractérisé par le fait que le point de basculement (63) du levier secondaire (6) prend appui sur l'extrémité supérieure (25) d'un guide (24) perpendiculaire au fond du support (2) et par le fait que ce guide passe à travers le levier primaire (4) par une ouverture oblongue (44).

5. Mécanisme de baromètre selon la revendication 4, caractérisé par le fait que l'extrémité libre du levier secondaire (6) est une pointe (62), par le fait que cette pointe pénètre dans la rampe hélicoïdale (51) et par le fait que les mouvements du levier (6) entraînent la vis sans fin (5) en rotation angulaire.

## Patentansprüche

1. Aneroidbarometer-Mechanismus mit einem Träger (2), einer Aneroiddose (3), einer einen Zeiger tragenden Welle, einer Skalenscheibe und Mitteln zur Umwandlung der linearen Deformationsbewegungen der Dose in Drehbewegungen des Zeigers, dadurch gekennzeichnet, dass diese Mittel darin bestehen, dass in einem Träger (2) ein erster Hebel (4), dessen Mittelpunkt (43) in Berührung mit dem Mittelpunkt (31) der Dose (3) gehalten wird und welcher eine an ihm befestigte, durch die den Zeiger tragende Welle (53) verlängerte Schnecke (5) trägt, ein mit dem ersten Hebel verbundener zweiter Hebel (6), welcher die Schnecke betätigt, und eine Feder (8) zusammenwirken, wobei sich die Feder auf dem Träger (2) abstützt, um eine Widerstandskraft (R) auf den zweiten Hebel auszuüben, welcher sie auf den ersten Hebel überträgt, dass die Drehachse (40) des ersten Hebels (4) in einer Aufnahmeöffnung (21) am Umfang des Trägers (2) gelagert ist, dass das freie Ende (41) des ersten Hebels die Drehachse (60) des zweiten Hebels (6) in Höhe einer bogenförmigen Aussparung (23) des Trägers trägt und dass der Schwenkpunkt (63) des zweiten Hebels (6) sich auf einer Führung (24) abstützt.

2. Barometermechanismus nach Anspruch 1, dadurch gekennzeichnet, dass der Mittelpunkt (43) des ersten Hebels (4) durch die Feder (8) in Berührung mit dem Mittelpunkt (31) der Dose (3) gehalten wird.

3. Barometermechanismus nach Anspruch 2, dadurch gekennzeichnet, dass die Schnecke (5) in einem Einsatzteil (42) im Mittelpunkt des ersten Hebels (4) untergebracht und an diesem ersten Hebel mittels einer durch Schrauben (70) befestigten Brücke (7) angebracht ist und dass die Schnecke drei Teile, einen Zapfen (52), einen mit einer schraubenförmigen Rampe (51) versehenen Zylinder (50) und die den Zeiger tragende Welle (53), aufweist, welche zu ein und derselben Achse XX konzentrisch sind, die senkrecht zu den überlagerten Ebenen des Trägers (2), der Dose (3) und des ersten Hebels orientiert ist.

4. Barometermechanismus nach Anspruch 3, dadurch gekennzeichnet, dass der Schwenkpunkt (63) des zweiten Hebels (6) sich auf dem oberen Ende (25) der senkrecht zum Boden des Trägers (2) angeordneten Führung (24) abstützt und dass diese Führung durch eine im ersten Hebel (4) vorgesehene Längsöffnung (44) hindurchragt.

5. Barometermechanismus nach Anspruch 4, dadurch gekennzeichnet, dass das freie Ende des zweiten Hebels (6) aus einer Spitze (62) besteht, dass diese Spitze in die schraubenförmige Rampe (51) eingreift und dass die Bewegungen des Hebels (6) die Schnecke (5) in Drehung versetzen.

**Claims**

1. A mechanism for an aneroid barometer comprising a support (2), an aneroid cell (3), a spindle carrying an indicator needle, a dial, means for converting the linear movements of deformation of the cell into angular rotational movements of the indicator needle, wherein these means are formed through the combined action, in a support (2), of a primary lever (4) the center (43) of which is held in contact with the center (31) of the cell (3), carrying an endless screw (5) which is integrally attached to the primary lever (4), extended by the spindle (53), carrying the indicator needle, of a secondary lever (6) connected to the primary lever and maneuvering the endless screw and of a spring (8) bearing on the support (2) in order to exert a resisting force (R) on the secondary lever which transmits it to the periphery lever, wherein the axis of rotation (40) of the primary lever (4) is located in a housing (21) at the periphery of the support (2), wherein the free end (41) of the primary lever supports the axis of rotation (60) of the secondary lever (6) at the level of a notch (23) of the support, and wherein the rocking point (63) of the secondary lever (6) bears on a guide (24).

2. A mechanism for a barometer as claimed in claim 1, wherein the center (43) of the primary lever (4) is held in contact with the center (31) of the cell (3) by the spring (8).

3. A mechanism for a barometer as claimed in claim 2, wherein the endless screw (5) is placed in a cage (42) in the center of the primary lever (4) and is integrally attached to the primary lever by means of a bridge (7) fixed by screws (70), wherein it comprises three parts which are concentric with the same axis XX perpendicular to the superimposed planes of the support (2), of the cell (3) and of the primary lever, a pivot (52), a cylinder (50) provided with a helicoidal ramp (51), and a spindle (53) carrying the indicator needle.

4. A mechanism for a barometer as claimed in claim 3, wherein the rocking point (63) of the secondary lever (6) bears on the upper end (25) of a guide (24) perpendicular to the base of the support (2) and wherein the guide passes through the primary lever (4) via an oblong opening (44).

5. A mechanism for a barometer as claimed in claim 4, wherein the free end of the secondary lever (6) is a point (62), wherein this point penetrates into the helicoidal ramp (51) and wherein the movements of the lever (6) cause the angular rotation of the endless screw (5).

<u>Fig.1</u>

# Fig.2